# EUROPÄISCHE PATENTSCHRIFT

(11) **EP 1 431 588 B1**
(45) Veröffentlichungstag und Bekanntmachung des Hinweises auf die Patenterteilung: **01.06.2005**
(21) Anmeldenummer: 03026216.6
(22) Anmeldetag: 14.11.2003
(51) Int. Cl.: F15B 21/08, F15B 13/08, G02B 6/28

(54) **Opto-elektrofluidische Steuervorrichtung**
Opto-electro-fluidic control system
Dispositif de contrôle opto-électro-fluidique

(30) Priorität: 21.12.2002 DE 10260543
(43) Veröffentlichungstag der Anmeldung: 23.06.2004
(73) Patentinhaber: Festo AG & Co, 73734 Esslingen (DE)
(72) Erfinder: Berner, Michael, 73230 Kirchheim (DE); Bogdanowicz, Grzegorz, 73760 Ostfildern (DE)
(74) Vertreter: Abel, Martin

(56) Entgegenhaltungen:
- EP-A- 0 624 831
- WO-A-01/18405
- DE-A- 4 230 414
- US-A- 5 500 523
- PATENT ABSTRACTS OF JAPAN vol. 017, no. 379 (M-1447), 16. Juli 1993 (1993-07-16) & JP 05 065967 A (SMC CORP), 19. März 1993 (1993-03-19)

## Beschreibung

Die Erfindung betrifft eine elektrofluidische Steuervorrichtung mit mehreren gemeinsam an einen zur Übertragung von Steuersignalen dienenden seriellen Bus angeschlossenen, elektrisch betätigbaren Fluideinheiten.

Eine aus der DE 42 30 414 C2 bekannte elektrofluidische Steuervorrichtung dieser Art enthält eine Steuerungsbaugruppe, die mehrere in Reihe angeordnete, elektrisch betätigbare Fluideinheiten in Gestalt von Ventileinheiten aufweist. Die Steuerungsbaugruppe ist mit einem internen seriellen Bus ausgestattet, der eine elektrische Busleitung enthält, an die zum einen die Ventileinheiten und zum anderen eine zentrale elektronische Steuereinheit angeschlossen ist. Die Steuereinheit übermittelt über die Busleitung in serieller Abfolge Steuersignale zu den Ventileinheiten, die die jeweils an sie adressierten Steuersignale auslesen können, um dem entsprechend eine bestimmte Ventilfunktion auszuführen.

Der mit einer solchen Steuervorrichtung verbundene elektrische Verdrahtungsaufwand ist relativ groß. Auch können bei den elektrischen Verbindungen Kontaktprobleme auftreten, die die Funktionsfähigkeit beeinträchtigen.

Aus dem Dokument WO 01/18405 ist auch eine Steuervorrichtung bekannt, wobei der serielle Bus als optischer Bus ausgebildet ist, zu dessen Bildung eine zum Aussenden mindestens eines aufmodulierte Signalinformationen aufweisenden Lichtstrahls geeignete zentrale Sendestation sowie den einzelnen Fluideinheiten zugeordnete individuelle Empfangsstationen vorgesehen sind.

Es ist die Aufgabe der vorliegenden Erfindung, eine elektrofluidische Steuervorrichtung vorzuschlagen, die bei zuverlässiger Funktionsweise einen einfachen Aufbau hat.

Zur Lösung dieser Aufgabe ist bei einer Steuervorrichtung der eingangs genannten Art vorgesehen, dass der optische Bus im Strahlweg des Lichtstrahls angeordnete, den einzelnen Empfangsstationen zugeordnete Strahlteiler aufweist, die in der Lage sind, den Lichtstrahl jeweils teils zum darauffolgenden Strahlteiler durchzulassen und teils zur zugeordneten Empfangsstation umzulenken.

Auf diese Weise erhalten die einzelnen Fluideinheiten die für den Betrieb erforderlichen Steuersignale in Gestalt von Signalinformationen, die auf den Lichtstrahl eines optischen Busses aufmoduliert sind. Zur Vermeidung umständlicher schleifenartiger Lichtstrahlführungen und zur Reduzierung des Energieverlustes passiert der von der zentralen Sendestation kommende Lichtstrahl sämtliche Fluideinheiten, wobei durch die Strahlteiler punktuelle Abzweigungen bewirkt werden, so dass der Lichtstrahl auch zu den individuellen Empfangsstationen gelangt. Der auf diese Weise realisierte optische Bus vermeidet aufwendige elektromechanische Verkettungen und garantiert eine sehr schnelle Informationsübertragung. Kontaktierungsprobleme, wie sie bei elektrischen Bussen auftreten, können ebenfalls vermieden werden.

Die Erfindung lässt sich in Verbindung mit beliebigen Arten von elektrisch betätigbaren Fluideinheiten realisieren, insbesondere mit Ventileinheiten und/oder mit zur Druckluftaufbereitung einsetzbaren Wartungseinheiten.

Aus dem Patent Abstract of Japan zur JP 05065967 A ist zwar ein optisches Bussystem im Zusammenhang mit einer mit Magnetventilen ausgestatteten elektrofluidischen Steuervorrichtung bereits bekannt. Allerdings dient dort der optische Bus lediglich zur Fernübermittlung von Signalen zu der die Ventileinheiten aufweisenden Steuerungsbaugruppe, wobei die Ventileinheiten untereinander in konventioneller Weise elektromechanisch verkettet sind. Die in Verbindung mit der DE 42 30 414 C2 geschilderten Nachteile sind folglich weiterhin vorhanden.

Vorteilhafte Weiterbildungen der Erfindungen gehen aus den Unteransprüchen hervor.

Die Strahlteiler können beispielsweise von teilweise lichtdurchlässigen Spiegeln gebildet sein. Es ist vorteilhaft, wenn Sie aus Glas oder Kunststoffmaterial bestehen.

Besonders kompakte Abmessungen in Verbindung mit einem einfachen Aufbau lassen sich erzielen, wenn die von den einzelnen Strahlteilern durchgelassen Teilstrahlen des Lichtstrahls auf einer geraden Linie liegen. Abgesehen von den durch die Strahlteiler hervorgerufenen Umlenkungen treten in diesem Falle keine Lichtstrahl-Umlenkungen auf, die die Strahlintensität schwächen könnten.

Die seriell zu übermittelnden Signalinformationen - insbesondere Adressdaten in Verbindung mit spezifisch zugehörigen Ansteuerdaten - können dem Lichtstrahl beispielsweise durch Lichtpulse, Variation der Leuchtintensität, Amplitudenmodulation oder Frequenzmodulation aufmoduliert werden.

Zur Erzeugung des Lichtstrahls wird zweckmäßigerweise ein Laser oder eine Diode verwendet.

Der Lichtstrahl kann sich sowohl im sichtbaren als auch im unsichtbaren Lichtspektrum bewegen.

Es ist ferner vorteilhaft, wenn über den optischen Bus nicht nur Signalinformationen zu den einzelnen Fluideinheiten übertragen werden, sondern auch Rückmeldeinformationen von den einzelnen Fluideinheiten zu einer zentralen Empfangsstation zurückgesandt werden. Die Rückmeldeinformationen können beispielsweise Empfangsbestätigungen hinsichtlich der erhaltenen Signalinformationen sein oder zu Diagnosezwecken eingesetzte Informationen, die bestimmte Betriebszustände der Fluideinheiten oder deren Komponenten melden.

Obgleich sich die Steuervorrichtung auch mit dezentral angeordneten Fluideinheiten betreiben lässt, ergeben sich besondere Vorteile in Verbindung mit einer Bauform, bei der die Fluideinheiten unter linearer Aufreihung als Bestandteil einer Steuerungsbaugruppe ausgebildet sind, die auch zumindest teilweise den optischen Bus beinhaltet. Die Steuerungsbaugruppe verfügt dann zweckmäßigerweise zumindest über die Strahlteiler und die individuellen Empfangsstationen der Fluideinheiten. Die zentrale Sendestation ist vorzugsweise ebenfalls eine Komponente der Steuerungsbaugruppe, kann jedoch bei Bedarf auch extern platziert werden, wobei der Lichtstrahl dann beispielsweise über Lichtleiter zur Steuerungsbaugruppe übermittelt wird.

Die für den Betrieb der Komponenten der Fluideinheiten erforderliche elektrische Energie kann ebenfalls durch den optischen Bus übermittelt werden, wenn die geforderte elektrische Leistung nicht zu groß ist. Andernfalls kann die elektrische Energie den Fluideinheiten konventionell zugeführt werden, beispielsweise über elektrische Kabel oder sonstige elektrisache Leiter. Wird die Steuerungsbaugruppe durch Zuganker zusammengehalten, wie dies beispielsweise in der DE 299 09 529 U beschrieben wird, kann mindestens ein Zuganker selbst als elektrischer Leiter für die Zufuhr elektrischer Betriebsenergie zu den Fluideinheiten herangezogen werden.

Um Fremdeinflüsse zu vermeiden, sind die Strahlteiler zweckmäßigerweise in einem Lichtkanal angeordnet der zweckmäßigerweise zur Umgebung hin lichtundurchlässig abgeschlossen ist. Dieser kann von einem gesonderten Kanalbauteil gebildet sein, beispielsweise ein kastenähnliches Profilteil oder ein Lichtleiter. Bei modularem Aufbau einer Steuerungsbaugruppe besteht allerdings auch die Möglichkeit, die aneinander gesetzten Fluideinheiten mit fluchtenden Durchgangsöffnungen zu versehen, die sich zu dem Lichtkanal ergänzen.

Nachfolgend wird die Erfindung anhand der beiliegenden Zeichnung näher erläutert. In dieser zeigen:
- Figur 1: in schematischer Darstellung eine mögliche Ausgestaltung der elektrofluidischen Steuervorrichtung im Längsschnitt, wobei Ventileinheiten als Fluideinheiten vorgesehen sind,
- Figur 2: in Einzeldarstellung eine als Ventileinheit ausgebildete Fluideinheit einer bevorzugten Ausführungsform der Steuervorrichtung, und
- Figur 3: einen Ausschnitt einer modularen Steuerungsbaugruppe einer weiteren Bauform der erfindungsgemäßen Steuervorrichtung.

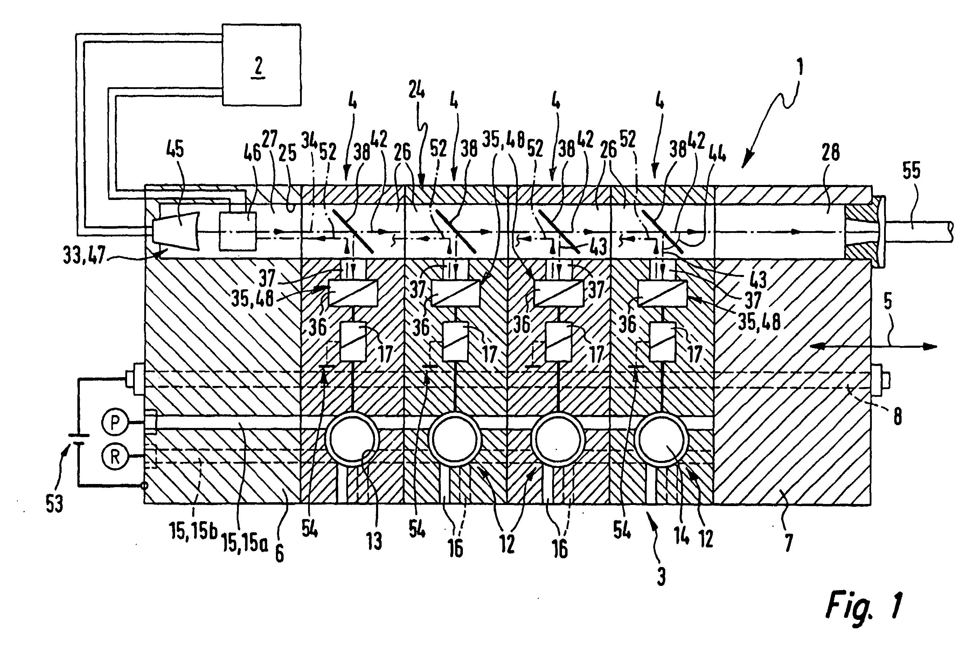

Die Figur 1 zeigt eine elektrofluidische Steuervorrichtung 1 mit einem elektronischen Steuergerät 2 und einer daran angeschlossenen, modular aufgebauten Steuerungsbaugruppe 3.

Die Steuerungsbaugruppe 3 enthält mehrere elektrisch betätigbare Fluideinheiten 4, mit denen sich ein fluidisches Druckmedium steuern lässt, wobei als Druckmedium insbesondere Druckluft vorgesehen ist. Bei den Fluideinheiten 4 des Ausführungsbeispiels handelt es sich um Ventileinheiten, anhand deren die weitere Erläuterung unter Beibehaltung der Bezugsziffer "4" erfolgt. Die Ausführungen gelten allerdings sinngemäß für andersartige Fluideinheiten, beispielsweise für Wartungseinheiten wie Regler-, Öler- oder Filtereinheiten oder dergleichen, die bei der Aufbereitung von Druckluft eingesetzt werden.

Die Ventileinheiten 4 sind in einer durch einen Doppelpfeil angedeuteten linearen Aufreihungsrichtung 5 aneinandergereiht und sitzen zwischen zwei Abschlussmodulen 6, 7, mit denen sie mittels einem oder mehrerer Zuganker 8 in der Aufreihungsrichtung 5 fest zusammengespannt sind.

Die Ventileinheiten 4 enthalten jeweils ein fluidisch betätigbares Hauptventil 12 mit einem in einer Aufnahme 13 angeordneten beweglichen Ventilglied 14. Das Ventilglied 14 ist zweckmäßigerweise ein Kolbenschieber.

Mehrere Hauptkanäle 15 durchziehen die Ventileinheiten 4 in der Aufreihungsrichtung 5 und erstrecken sich zudem durch wenigstens eines der Abschlussmodule 6 hindurch. Durch diese Hauptkanäle 15 hindurch erfolgt die Zufuhr und Abfuhr des von den Hauptventilen 12 gesteuerten Druckmediums. Dabei setzen sich die Hauptkanäle 15 jeweils aus mehreren Kanalabschnitten zusammen, die die einzelnen Ventileinheiten 4 und das mindestens eine Abschlussmodul 6 durchsetzen und die miteinander fluchten. Innerhalb der Hauptventile 12 kommunizieren die Hauptkanäle 15 mit der Aufnahme 13.

In die Aufnahme 13 jedes Hauptventils 12 münden ferner mehrere andererseits zur Außenfläche der Ventileinheit 4 ausmündende Arbeitskanäle 16. An sie können über nicht näher dargestellte Fluidleitungen anzusteuernde Verbraucher, beispielsweise durch Fluidkraft betätigbare Antriebe, angeschlossen werden.

Jede Ventileinheit 4 enthält einen elektrischen Ventilantrieb 17 zum wunschgemäßen Positionieren des Ventilgliedes 14 des zugehörigen Hauptventils 12. Die Ventilantriebe 17 des Ausführungsbeispiels sind von Elektromagnetventilen gebildet, könnten aber beispielsweise auch als Piezoventile ausgebildet sein. Sie übernehmen die Funktion von Vorsteuerventilen hinsichtlich des Hauptventils 12. Bei Bedarf kann jede Ventileinheit 4 mehrere elektrische Ventilantriebe 17 enthalten.

Durch die Ventilantriebe 17 kann die Stellung des zugeordneten Ventilgliedes 14 beeinflusst werden und dementsprechend die Verbindung zwischen den Arbeitskanälen 16 und den Hauptkanälen 15. Unter den Hauptkanälen 15 befindet sich ein Speisekanal 15a, der an eine Druckquelle P anschließbar ist, sowie mindestens ein Entlüftungskanal 15b, der zur Atmosphäre R führt und über den das von den Verbrauchern stammende Druckmedium zurückströmen kann.

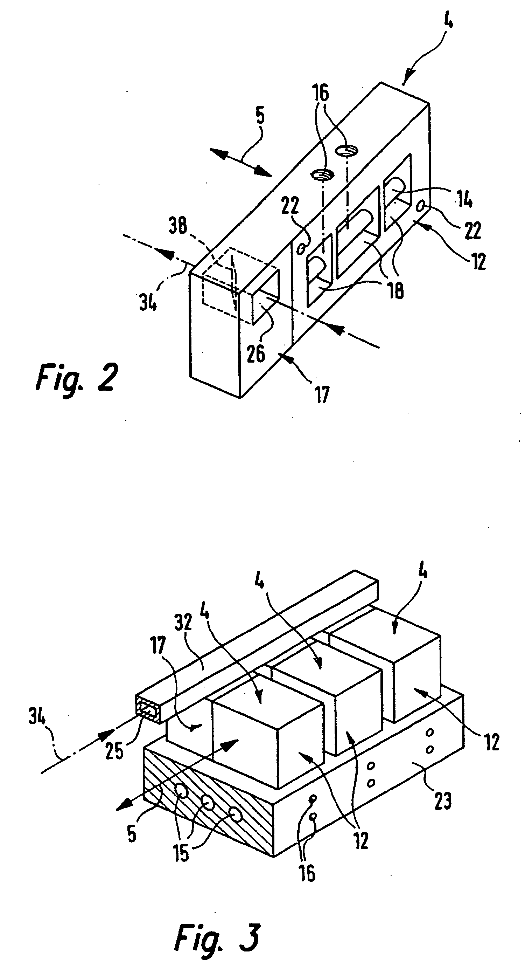

In Figur 2 ist eine mögliche Bauform einer Ventileinheit 4 gezeigt, wie sie bei der Steuerungsbaugruppe 3 gemäß Figur 1 verwendbar ist. Man erkennt den platten- oder scheibenartigen Aufbau mit Hauptventil 12 und, in diesem Falle, gesondert an das Hauptventil 12 angesetztem Ventilantrieb 17. Zu sehen sind ferner drei das Hauptventil 12 in der Ausreihungsrichtung 5 durchsetzende Durchbrechungen 18, die in Verbindung mit gleichartigen Durchbrechungen der sich anschließenden Ventileinheiten 4 die Hauptkanäle 15 bilden. Ferner sind weitere Durchbrechungen 22 sichtbar, durch die die Zuganker 8 hindurchgeführt werden.

Die in Figur 3 gezeigte Bauform der Steuervorrichtung 1 unterscheidet sich von den bisher beschriebenen vor allem dadurch, dass die Steuerungsbaugruppe 3 einen gesonderten Fluidverteilerkörper 23 aufweist, in dem die Hauptkanäle 15 und die Arbeitskanäle 16 verlaufen und der mit den Ventileinheiten 4 bestückt ist. Letztere enthalten wiederum ein Hauptventil 12 mit nicht näher gezeigtem Ventilglied sowie einen an das Hauptventil 12 angesetzten elektrischen Ventilantrieb 17. Wiederum sind aber auch hier die Ventileinheiten 4 in einer Aufreihungsrichtung 5 aufeinanderfolgend angeordnet. Anders als bei den Bauformen der Figuren 1 und 2 fehlt jedoch die direkt fluidische Verknüpfung zwischen den benachbarten Ventileinheiten 4.

Die weitere Ausstattung der Steuervorrichtungen 1 wird anhand der Figur 1 erläutert, wobei die Ausführungen auch für die anderen Bauformen gelten, sofern kein anders lautender Hinweis erfolgt.

Um die gewünschte Ventilfunktion auszuführen, werden die Ventilantriebe 17 der einzelnen Ventileinheiten 4 mit Steuersignalen versorgt, die ausgehend von dem elektronischen Steuergerät 2 unter Zwischenschaltung eines seriellen, optischen Busses 24 übermittelt werden. Das elektronische Steuergerät 2 ist beim Ausführungsbeispiel extern von der Steuerungsbaugruppe 3 angeordnet, kann bei Bedarf aber auch an Bord der Steuerungsbaugruppe 3 platziert werden.

Bestandteil des optischen Busses 24 ist ein zur Umgebung hin bevorzugt lichtundurchlässig abgeschlossener Lichtkanal 25, der sich in der Aufreihungsrichtung 5 längs den Ventileinheiten 4 erstreckt. Entsprechend dem bei den Hauptkanälen 15 verfolgten Konzept setzt sich auch der Lichtkanal 25 beispielsweise aus mehreren miteinander fluchtenden Kanalabschnitten zusammen. Diese Kanalabschnitte sind gebildet zum einen von die einzelnen Ventileinheiten 4 in der Aufreihungsrichtung 5 durchsetzenden und miteinander fluchtenden Durchgangsöffnungen 26 und zum anderen von einem vorderen und einem hinteren Kanalendabschnitt 27, 28, die, wiederum fluchtend, in zum einen dem vorderen und zum anderen dem hinteren Abschlussmodul 6, 7 ausgebildet sind. Stirnseitig ist der Lichtkanal 25 verschlossen.

Abweichend von dieser Bauform ist der Lichtkanal 25 im Falle der Figur 3 von einem gesonderten rohrförmigen Kanalbauteil 32 gebildet, das parallel zur Aufreihungsrichtung 5 an die Ventileinheiten 4 angesetzt ist und insbesondere nicht in einzelne Längenabschnitte unterteilt ist.

Einem Ende des Lichtkanals 25 ist eine zentrale Sendestation 33 zugeordnet, die in der Lage ist, entsprechend von dem elektronischen Steuergerät 2 enthaltenen Steuerbefehlen einen Lichtstrahl 34 auszusenden, auf den geeignete Signalinformationen aufmoduliert sind und der den Lichtkanal 25 in dessen Längsrichtung durchläuft. Bei den Signalinformationen handelt es sich insbesondere um seriell ausgesandte Informationsgruppen, die jeweils auf die einzelnen Ventileinheiten 4 abgestimmte Adressdaten und zugehörigen Ansteuerdaten beinhalten.

Jede Ventileinheit 4 ist mit einer individuellen optischen Empfangsstation 35 ausgestattet, der durch den Lichtstrahl 34 sämtliche Signalinformationen zugeleitet werden und die über eine Dekodiereinrichtung 36 verfügt, in der diejenigen Ansteuerdaten ausgelesen werden, die entsprechend der internen Adresse der Ventileinheit 4 für diese bestimmt sind.

Die Empfangsstation 35 enthält einen nicht näher dargestellten optoelektrischen Wandler, der die erhaltenen optischen Signalinformationen in elektrische Signale umwandelt und an den zugeordneten Ventiltrieb 17 weiterleitet, um diesen wunschgemäß zu betätigen.

Die Empfangsstationen 35 sitzen bevorzugt seitlich neben dem Lichtkanal 25 mit direktem Zugang zu diesem, was beim Ausführungsbeispiel über Zweigkanäle 37 realisiert wird.

Der optische Bus 24 verfügt des weiteren über im Strahlweg des Lichtstrahle 34 angeordnete Strahlteiler 38, wobei jeder der individuellen Empfangsstationen 35 und mithin jeder Ventileinheit 4 ein solcher Strahlteiler 38 zugeordnet ist. Die Strahlteiler sind im Innern des Lichtkanals 25 platziert und dort auf Höhe der jeweils zugeordneten Ventileinheit 4.

Die Strahlteiler 38 sind so ausgebildet, dass sie in der Lage sind, den von der zentralen Sendestation 33 kommenden Lichtstrahl teilweise zum darauffolgenden Strahlteiler hin durchzulassen und teilweise zur zugeordneten individuellen Empfangsstation 35 umzulenken. Beim Durchlaufen des Lichtkanals 35 wird der Lichtstrahl 34 also beim Passieren jedes Strahlteilers 38 in einen ungehindert durchgehenden Teilstrahl 42 und einen zur benachbarten Empfangsstation 35 umgelenkten Teilstrahl 43 aufgespalten. Dabei bleiben in jedem Teilstrahl 42, 43 die aufmodulierten Signalinformationen erhalten.

Somit werden die einzelnen Ventileinheiten 4 von dem Lichtstrahl 34 zwar in der Aufreihungsrichtung 5 passiert, gleichzeitig empfängt aber jede Ventileinheit 4 sämtliche in dem Lichtstrahl enthaltenen Signalinformationen zur Auswertung und gegebenenfalls Veranlassung entsprechender Funktionen.

Beim Ausführungsbeispiel sind die Strahlteiler 38 von partiell lichtdurchlässigen Spiegeln gebildet. Allerdings wird bereits mit einfachen Glasscheiben der gewünschte Effekt des Aufteilens des Lichtstrahls 34 erzielt.

Bevorzugt bestehen die Strahlteiler aus Glas oder aus Kunststoffmaterial. Sie können bei Bedarf mit einer geeigneten Schicht bedampft sein, um die gewünschte partielle Durchlässigkeit sowie das partielle Reflexionsvermögen zu erhalten.

Es ist zweckmäßig, die Strahlteiler 38 so auszubilden und anzuordnen, dass zwischen dem jeweils durchgelassenen Teilstrahl 42 und dem durch Reflexion umgelenkten Teilstrahl 43 ein Winkel 44 von 90° vorliegt. Dadurch lassen sich besonders kompakte Abmessungen realisieren. In einem solchen Fall werden, wie dies aus Figur 1 hervorgeht, die einzelnen Strahlteiler 38 und die diesen zugeordneten Empfangsstationen 35 zweckmäßigerweise auf gleicher Höhe in der Aufreihungsrichtung 5 angeordnet.

Die von den einzelnen Strahlteilern durchgelassenen Teilstrahlen 42 liegen zweckmäßigerweise auf einer geraden Linie. Es besteht allerdings die Möglichkeit, insbesondere bei komplexer aufgebauten Steuerungsgruppen 3, auch nicht-lineare Strahlverläufe vorzusehen. Zur Erzeugung des Lichtstrahl 34 ist die zentrale Sendestation 33 mit einer geeigneten Lichtquelle 45 ausgestattet, die in der Lage ist, paralleles Licht hervorzurufen. Besonders empfehlenswert aufgrund der hohen Energiedichte ist hier ein Laser. Auch eine Diode könnte verwendet werden.

Der erzeugte Lichtstrahl kann aus sichtbarem Licht oder aus unsichtbarem Licht bzw. Infrarotlicht bestehen.

Die zentrale Sendestation 33 enthält ferner eine Aufmoduliereinrichtung 46 zur Erzeugung der vom Lichtstrahl 34 mitgeführten Signalinformationen. Durch die Aufmoduliereinrichtung 46 kann beispielsweise ein gepulsteter bzw. getakteter Lichtstrahl 34 hervorgerufen werden oder auch eine Variation der Strahlungsintensität. Eine Amplitudenmodulation oder Frequenzmodulation ist ebenfalls möglich. Ferner können die einzelnen Modulationsarten auch beliebig kombiniert werden.

Die Sendestation 46 kann auch zur Aussendung mehrerer mit Signalinformationen versehener Lichtstrahlen 34 ausgebildet sein.

Um einen noch komfortableren Betrieb der Steuervorrichtung 1 zu ermöglichen, kann vorgesehen werden, den optischen Bus 24 nicht nur zur Hinübermittlung von Signalinformationen zu den einzelnen Ventileinheiten 4 einzusetzen, sondern auch zur Rückübermittlung von Rückmeldeinformationen von den einzelnen Ventileinheiten 4 zu einer zentralen Empfangsstation 47. Letzteres ermöglicht beispielsweise die Realisierung von Diagnosefunktionen zur Überwachung des Betriebs der Ventileinheiten 4 bzw. einzelner Komponenten derselben und zur Rückmeldung von Statusinformationen.

Die abgebildete Steuervorrichtung 1 ist mit derartigen Rückmeldemaßnahmen ausgestattet, wobei der gleiche optische Bus 24 verwendet wird wie zur Hinübermittlung der Signalinformationen. Im Vergleich zum ebenfalls möglichen Einsatz eines gesonderten optischen Busses für die Rückmeldung hat dies den Vorteil eines wesentlich kompakteren und kostengünstigeren Aufbaus.

Um die Rückmeldung realisieren zu können, sind die einzelnen Ventileinheiten 4 zusätzlich zu den individuellen Empfangsstationen 35 jeweils mit einer individuellen Sendestation 48 ausgestattet, die in der Lage ist, einen Rückmelde-Lichtstrahl 52 auszusenden, auf den die gewünschten Rückmeldeinformationen aufmoduliert sind. Die technische Ausstattung der individuellen Sendestationen 48 kann dabei derjenigen der zentralen Sendestation 33 entsprechen.

Die einzelnen Rückmelde-Lichtstrahlen 52 treffen nun ihrerseits, allerdings mit entgegengesetzter Strahlrichtung, auf die im Strahlweg angeordneten Strahlteiler 38 und werden im Lichtkanal 25 zur zentralen Empfangsstation 47 hin umgelenkt. Dort erfolgt die Dekodierung in der schon beschriebenen Art und Weise, wobei die technische Ausstattung derjenigen der individuellen Empfangsstationen 35 grundsätzlich entsprechen kann. Im angeschlossenen elektronischen Steuergerät 2 werden die erhaltenen Signale ausgewertet und nach Bedarf weiter verarbeitet.

Beim Ausführungsbeispiel ist vorgesehen, dass zum einen die zentrale Sendestation 33 und die zentrale Empfangsstation 47 sowie zum anderen die einer jeweiligen Ventileinheit 4 zugeordnete individuelle Empfangsstation 35 und individuelle Sendestation 48 in Baueinheit miteinander ausgeführt sind. Gegenüber einer ebenfalls möglichen separaten Ausgestaltung hat dies wiederum vor allem den Vorteil kompakterer Abmessungen und eines kostengünstigen Aufbaus.

Aus Figur 1 geht hervor, dass die Strahlteiler 38 in die jeweils zugeordnete Ventileinheit 4 integriert sein können. Durch die Bauform der Figur 3 wird deutlich, dass alternativ auch ein gesonderter Anbau möglich ist, insbesondere in Verbindung mit einem Kanalbauteil, das den Lichtkanal 25 enthält, in den dann die Strahlteiler 38 zweckmäßigerweise eingebaut sind.

Ist die elektrische Leistungsaufnahme der elektrischen Komponenten der Ventileinheiten 4 relativ gering, kann die erforderliche elektrische Energie ohne weiteres ebenfalls über den optischen Bus 24 übermittelt werden. Andernfalls erfolgt eine gesonderte Energiezufuhr, beispielsweise mittels einzelner Kabel oder mittels an sich bekannter elektromechanischer Verkettungstechniken. Besonders vorteilhaft wird derzeit allerdings die in Figur 1 angedeutete Bauform angesehen, bei der mindestens einer der die Steuerungsbaugruppe zusammenhaltenden Zuganker 8 als elektrischer Leiter für die Zufuhr der elektrischen Betriebsenergie zu den Ventileinheiten 4 ausgebildet ist. Der Zuganker 8 besteht aus elektrisch leitendem Material oder ist elektrisch leitend beschichtet und an eine Spannungsquelle 53 angeschlossen, die andererseits, als Masseverbindung, an eine elektrisch leitende Gehäusekomponente der Steuerungsbaugruppe 3 angeschlossen ist. Ist über die Gehäusekomponenten keine Masseverbindung möglich, kann ein weiterer Zuganker als Nullleiter eingesetzt werden.

Jede Ventileinheit 4 ist nun mit einer Abgriffseinrichtung 54 ausgestattet, die bei installiertem Zuganker 8 an dessen leitfähiger Außenfläche zur Anlage gelangt und dadurch eine elektrische Kontaktierung bewirkt. Gleichzeitig ist die Abgriffseinrichtung 54 mit dem betreffenden elektrischen Ventilantrieb 17 oder auch anderen elektrisch betätigten Komponenten der Ventileinheit 4 verbunden. Somit wird der mechanische Aufwand für die Zufuhr der elektrischen Betriebsenergie beträchtlich reduziert.

An dem der zentralen Sendestation 33 entgegengesetzten Ende kann der Lichtkanal 25 mit einer Absorbtionsfläche ausgestattet sein, die den ankommenden Lichtstrahl absorbiert und unerwünschte Rück-Reflexionen verhindert. Wie in Figur 1 angedeutet ist, besteht allerdings auch die Möglichkeit, den am Ende des Lichtkanals 25 ankommenden Lichtstrahl 45 mittels eines Lichtleiters 55 abzugreifen und einer weiteren Steuerungsbaugruppe 3 zuzuleiten, die mit dem gleichen optischen Bus 24 vernetzt werden soll.

## Patentansprüche

1. Elektrofluidische Steuervorrichtung, mit mehreren gemeinsam an einen zur Übertragung von Steuersignalen dienenden seriellen Bus angeschlossenen, elektrisch betätigbaren Fluideinheiten (4), wobei der serielle Bus als optischer Bus (24) ausgebildet ist, zu dessen Bildung eine zum Aussenden mindestens eines aufmodulierte Signalinformationen aufweisenden Lichtstrahls (34) geeignete zentrale Sendestation (33) sowie den einzelnen Fluideinheiten (4) zugeordnete individuelle Empfangsstationen (35) vorgesehen sind, **dadurch gekennzeichnet, dass** der optische Bus (24) im Strahlweg des Lichtstrahls (34) angeordnete, den einzelnen Empfangsstationen (35) zugeordnete Strahlteiler (38) aufweist, die in der Lage sind, den Lichtstrahl (34) jeweils teils zum darauffolgenden Strahlteiler (38) durchzulassen und teils zur zugeordneten Empfangsstation (35) umzulenken.

2. Steuervorrichtung nach Anspruch 1, **dadurch gekennzeichnet, dass** die Strahlteiler (38) von teilweise lichtdurchlässigen Spiegeln gebildet sind.

3. Steuervorrichtung nach Anspruch 1 oder 2, **dadurch gekennzeichnet, dass** die Strahlteiler (38) aus Glas oder Kunststoffmaterial bestehen.

4. Steuervorrichtung nach einem der Ansprüche 1 bis 3, **dadurch gekennzeichnet, dass** die Strahlteiler (38) so ausgebildet und angeordnet sind, dass zwischen dem umgelenkten und dem durchgelassenen Teilstrahl (43, 42) ein Winkel von 90° vorliegt.

5. Steuervorrichtung nach einem der Ansprüche 1 bis 4, **dadurch gekennzeichnet, dass** die von den einzelnen Strahlteilern (38) durchgelassenen Teilstrahlen (42) auf einer geraden Linie liegen.

6. Steuervorrichtung nach einem der Ansprüche 1 bis 5, **dadurch gekennzeichnet, dass** die Signalinformationen durch Pulsation und/oder Intesitätsvariation und/oder Amplitudenund/oder Frequenzmodulation auf den Lichtstrahl (34) aufmoduliert sind.

7. Steuervorrichtung nach einem der Ansprüche 1 bis 6, **dadurch gekennzeichnet, dass** die zentrale Sendestation (33) eine paralleles Licht erzeugende Lichtquelle (35) enthält, insbesondere einen Laser oder eine Diode.

8. Steuervorrichtung nach einem der Ansprüche 1 bis 7, **dadurch gekennzeichnet, dass** der Lichtstrahl (34) ein nicht sichtbarer Lichtstrahl ist, insbesondere ein Infrarot-Lichtstrahl.

9. Steuervorrichtung nach einem der Ansprüche 1 bis 8, **dadurch gekennzeichnet, dass** die Empfangsstationen (35) eine Dekodiereinrichtung (36) für die empfangenen Signalinformationen aufweisen.

10. Steuervorrichtung nach einem der Ansprüche 1 bis 9, **dadurch gekennzeichnet, dass** den einzelnen Fluideinheiten (4) zumindest teilweise zusätzlich eine individuelle Sendestation (48) zugeordnet ist, die zum Aussenden eines aufmodulierte Rückmeldeinformationen aufweisenden Rückmelde-Lichtstrahls (52) in der Lage ist, der über den optischen Bus (24) einer zentralen Empfangsstation (47) zuleitbar ist.

11. Steuervorrichtung nach Anspruch 10, **dadurch gekennzeichnet, dass** die zentrale Sendestation (33) in Baueinheit mit der zentralen Empfangsstation (47) ausgebildet ist.

12. Steuervorrichtung nach Anspruch 10 oder 11, **dadurch gekennzeichnet, dass** die einer jeweiligen Fluideinheit (4) zugeordneten individuellen Empfangs- und Sendestationen (35, 48) in Baueinheit miteinander ausgeführt sind.

13. Steuervorrichtung nach einem der Ansprüche 1 bis 12, **dadurch gekennzeichnet, dass** die Fluideinheiten (4) unter linearer Aufreihung als Bestandteil einer Steuerungsbaugruppe (3) ausgebildet sind, die auch zumindest teilweise den optischen Bus (24) beinhaltet.

14. Steuervorrichtung nach Anspruch 13, **dadurch gekennzeichnet, dass** die Steuerungsbaugruppe (3) durch Zuganker (8) zusammengehalten wird.

15. Steuervorrichtung nach Anspruch 14, **dadurch gekennzeichnet, dass** mindestens ein Zuganker (8) als elektrischer Leiter für die Zufuhr elektrischer Betriebsenergie zu den Fluideinheiten (4) ausgebildet ist.

16. Steuervorrichtung nach einem der Ansprüche 1 bis 15, **dadurch gekennzeichnet, dass** die Strahlteiler (38) in einem zur Umgebung hin zweckmäßigerweise lichtundurchlässig abgeschlossenen Lichtkanal (25) angeordnet sind.

17. Steuervorrichtung nach Anspruch 16, **dadurch gekennzeichnet, dass** der Lichtkanal (25) zumindest teilweise von miteinander fluchtenden Durchgangsöffnungen (26) aneinander angesetzter Fluideinheiten (4) gebildet ist, in denen jeweils ein Strahlteiler (38) plaziert ist.

18. Steuervorrichtung nach Anspruch 16, **dadurch gekennzeichnet, dass** der Lichtkanal (25) in einem gesonderten Kanalbauteil (32) ausgebildet ist.

19. Steuervorrichtung nach einem der Ansprüche 1 bis 18, **dadurch gekennzeichnet, dass** die Strahlteiler (38) in die jeweils zugeordnete Ventileinheit (4) integriert oder daran angebaut sind.

20. Steuervorrichtung nach einem der Ansprüche 1 bis 19, **dadurch gekennzeichnet, dass** die Fluideinheiten (4) zumindest teilweise von Ventileinheiten gebildet sind.

21. Steuervorrichtung nach einem der Ansprüche 1 bis 20, **dadurch gekennzeichnet, dass** die Fluideinheiten (4) zumindest teilweise von Wartungseinheiten für die Druckluftaufbereitung gebildet sind.

## Claims

1. Electro-fluidic control unit with several electrically actuable fluidic units (4), connected jointly to a serial bus serving for the transmission of control signals, wherein the serial bus is in the form of an optical bus (24), for the formation of which there are provided a central transmitting station (33) suitable for the transmission of a light beam (34) with modulated signal data, and individual receiving stations (35) assigned to the individual fluidic units (4), **characterised in that** the optical bus (24) has beam splitters (38), arranged in the beam path of the light beam (34) and assigned to the individual receiving stations (35), and each capable of allowing part of the light beam (34) to pass through to the following beam splitter (38) and diverting part to the assigned receiving station (35).

2. Control unit according to claim 1, **characterised in that** the beam splitters (38) are formed by partially light-transmitting mirrors.

3. Control unit according to claim 1 or 2, **characterised in that** the beam splitters (38) are made of glass or plastic material.

4. Control unit according to any of claims 1 to 3, **characterised in that** the beam splitters (38) are so designed and arranged that there is an angle of 90° between the partial beam (43, 42) which is diverted and that which is allowed through.

5. Control unit according to any of claims 1 to 4, **characterised in that** the partial beams (42) allowed through by the individual beam splitters (38) lie on a straight line.

6. Control unit according to any of claims 1 to 5, **characterised in that** the signal data is modulated on to the light beam (34) by pulsation and/or variation in intensity and/or amplitude modulation and/or frequency modulation.

7. Control unit according to any of claims 1 to 6, **characterised in that** the central transmitting station (33) contains a light source (35) generating a parallel light, in particular a laser or a diode.

8. Control unit according to any of claims 1 to 7, **characterised in that** the light beam (34) is an invisible light beam, in particular an infrared light beam.

9. Control unit according to any of claims 1 to 8, **characterised in that** the receiving stations (35) have a decoding unit (36) for the signal data received.

10. Control unit according to any of claims 1 to 9, **characterised in that** the individual fluidic units (4) are additionally assigned at least in part an individual transmitting station (48), which is able to transmit a return light beam (52) with feedback data, which may be guided to a central receiving station (47) via the optical bus (24).

11. Control unit according to claim 10, **characterised in that** the central transmitting station (33) forms a unit together with the central receiving station (47).

12. Control unit according to claim 10 or 11, **characterised in that** the individual receiving and transmitting stations (35, 48) assigned to each fluidic unit (4) are combined into units.

13. Control unit according to any of claims 1 to 12, **characterised in that** the fluidic units (4) are lined up in a row as part of a control assembly (3) which also contains at least partly the optical bus (24).

14. Control unit according to claim 13, **characterised in that** the control assembly (3) is held together by tie rods (8).

15. Control unit according to claim 14, **characterised in that** one or more tie rods (8) is in the form of an electrical conductor for the supply of electrical operating power to the fluidic units (4).

16. Control unit according to any of claims 1 to 15, **characterised in that** the beam splitters (38) are mounted in an enclosed light conduit (25) which expediently keeps out light from the surrounding area.

17. Control unit according to claim 16, **characterised in that** the light conduit (25) is formed at least partly by through passages (26), aligned with one another, of abutting fluidic units (4), and in each of which a beam splitter (38) is located.

18. Control unit according to claim 16, **characterised in that** the light conduit (25) is in the form of a separate conduit component (32).

19. Control unit according to any of claims 1 to 18, **characterised in that** the beam splitters (38) are integral with or attached to the respectively assigned valve unit (4).

20. Control unit according to any of claims 1 to 19, **characterised in that** the fluidic units (4) are formed at least partly by valve units.

21. Control unit according to any of claims 1 to 20, **characterised in that** the fluidic units (4) are formed at least partly by air conditioner units for compressed air preparation.

## Revendications

1. Dispositif de commande électrofluidique, comprenant plusieurs unités fluidiques (4) pouvant être actionnées électriquement et raccordées en commun à un bus sérieservant à la transmission de signaux de commande, le bus série étant conçu comme un bus optique (24), pour la formation duquel sont prévues une station d'émission centrale (33) appropriée pour l'envoi d'au moins un faisceau lumineux (34) présentant des informations sous forme de signal moduléeset des stations de réception(35) individuelles et associées aux unités fluidiques (4) individuelles, **caractérisé en ce que** le bus optique (24) présentedes séparateursde faisceau (38) disposésdans la trajectoire du faisceau lumineux (34) et associés aux stations de réception (35) individuelles, qui sont en mesure de laisser passer le faisceau lumineux (34) respectivement en partie vers le séparateurde faisceau (38) suivant et en partie vers la station de réception (35) associée.

2. Dispositif de commande selon la revendication 1, **caractérisé en ce que** les séparateurs de faisceau (38) sont formés par des miroirs partiellement transparents.

3. Dispositif de commande selon la revendication 1 ou 2, **caractérisé en ce que** les séparateurs de faisceau (38) sont à base de verre ou de matériau synthétique.

4. Dispositif de commande selon l'une des revendications 1 à 3, **caractérisé en ce que** les séparateurs de faisceau (38) sont conçus et disposés de telle sorte qu'il existe un angle de 90° entre les faisceaux partiels (43, 42) déviés et transmis.

5. Dispositif de commande selon l'une des revendications 1 à 4, **caractérisé en ce que** les faisceaux partiels (42) transmis par les séparateurs de faisceau (38) individuels se situent sur une ligne droite.

6. Dispositif de commande selon l'une des revendications 1 à 5, **caractérisé en ce que** les informations sous forme de signal sont modulées par pulsation et/ou variation d'intensitéet/ou modulation d'amplitude et/ou modulation de fréquence sur le faisceau lumineux (34).

7. Dispositif de commande selon l'une des revendications 1 à 6, **caractérisé en ce que** la station d'émission centrale (33) contient une source de lumière (35) générant de la lumière parallèle, en particulier un laser ou une diode.

8. Dispositif de commande selon l'une des revendications 1 à 7, **caractérisé en ce que** le faisceau lumineux (34) est un faisceau lumineux non visible, en particulier un faisceau lumineux infrarouge.

9. Dispositif de commande selon l'une des revendications 1 à 8, **caractérisé en ce que** les stations de réception (35) présentent un équipement de décodage (36) pour les informations de signal reçues.

10. Dispositif de commande selon l'une des revendications 1 à 9, **caractérisé en ce qu'**aux unités fluidiques (4) individuelles est associée au moins en partie en supplément une station d'émission (48) individuelle, qui est en mesure d'émettre un faisceau lumineux d'accusé de réception (52) présentantdes informations d'accuséde réception modulées, lequel est amené au moyen du bus optique (24) à une station de réception centrale (47).

11. Dispositif de commande selon la revendication 10, **caractérisé en ce que** la station d'émission centrale (33) est conçue en une unité constructive avec la station de réception centrale (47).

12. Dispositif de commande selon la revendication 10 ou 11, caractérisé en que les stations de réception et d'émission (35, 48) individuelles, associéesà une unitéfluidique (4) respective, sont réuniesl'une avec l'autre en une unité constructive.

13. Dispositif de commande selon l'une des revendications 1 à 12, **caractérisé en ce que** les unités fluidiques (4) sont réalisées avec un alignement linéairecomme composant d'un ensemble de commande (3), qui contient également au moins partiellement le bus optique (24).

14. Dispositif de commande selon la revendication 13, **caractérisé en ce que** l'ensemble de commande (3) est maintenu assemblé par des tirants (8).

15. Dispositif de commande selon la revendication 14, **caractérisé en ce qu'**au moins un tirant (8) est conformé en conducteur électrique pour l'apport d'énergie électrique de service aux unités fluidiques (4).

16. Dispositif de commande selon l'une des revendications 1 à 15, **caractérisé en ce que** les séparateurs de faisceau (38) sont disposés dans un canal de lumière (25) fermé de préférencede façon opaque en direction de l'environnement.

17. Dispositif de commande selon la revendication 16, **caractérisé en ce que** le canal de lumière (25) est formé au moins partiellement par des ouvertures de passage (26) alignées les unes avec les autres d'unités fluidiques (4) placées les unes contre les autres, dans chacune desquelles est placé un séparateur de faisceau (38).

18. Dispositif de commande selon la revendication 16, **caractérisé en ce que** le canal de lumière (25) est formédans un composant de canal (32) séparé.

19. Dispositif de commande selon l'une des revendications 1 à 18, **caractérisé en ce que** les séparateurs de faisceau (38) sont intégrésdans l'unité de soupape (4) respectivement associée ou sont rapportés sur celle-ci.

20. Dispositif de commande selon l'une des revendications 1 à 19, **caractérisé en ce que** les unités fluidiques (4) sont formées au moins partiellement par des unités à soupape.

21. Dispositif de commande selon l'une des revendications 1 à 20, **caractérisé en ce que** les unités fluidiques (4) sont formées au moins partiellement par des unités de maintenance pour la fourniture d'air comprimé.
